Europäisches Patentamt

(19) European Patent Office

Office européen des brevets

(11) Numéro de publication: **0 056 543**

**A1**

# (12) DEMANDE DE BREVET EUROPEEN

(21) Numéro de dépôt: **81401989.9**

(22) Date de dépôt: **11.12.81**

(51) Int. Cl.³: **B 62 K 19/38**

(30) Priorité: **09.01.81 FR 8100304**

(43) Date de publication de la demande:
**28.07.82 Bulletin 82/30**

(84) Etats contractants désignés:
**BE CH DE GB IT LI NL SE**

(71) Demandeur: **ATELIERS DE LA MOTOBECANE**
**16, rue Lesault**
**F-93502 Pantin(FR)**

(72) Inventeur: **Rakover, Jean-Jacques**
**rue A. Mathias**
**F-02100 Morcourt(FR)**

(74) Mandataire: **Maureau, Bernard et al,**
**Cabinet Germain, Maureau et Millet Conseils en Brevets**
**d'Invention 64, rue d'Amsterdam**
**F-75009 Paris(FR)**

(54) **Support de transmission de frein arrière pour cycle.**

(57) Ce support de transmission est constitué par une patte (12) montée libre à la fois sur la partie centrale de sa vis de fixation (6) et entre les deux oreilles (4) solidaires soit du cadre du cycle, soit d'un collier rapporté sur lui, de telle sorte que le serrage ou le desserrage de cette vis de fixation (6) n'affecte pas l'alignement de cette patte dans l'axe de tirage du frein.

FIG. 1

EP 0 056 543 A1

Croydon Printing Company Ltd.

L'invention a pour objet un support de transmission de frein arrière pour cycle.

Sur les cycles équipés d'un frein arrière à mâchoires à tirage central, il est habituel d'utiliser les mêmes moyens pour immobiliser la tige de selle dans le tube de selle et pour servir à la fixation du support servant de butée à l'extrémité arrière de la gaine dans laquelle passe le câble commandant le frein arrière.

Ce support consiste habituellement en une patte repliée en forme de fourche, dont les deux jambes sont placées de part et d'autre de deux oreilles du tube de selle et sont traversées par la tige d'une vis de fixation, cependant que la partie centrale ou âme de cette patte est traversée par le câble et sert elle-même de butée à la gaine du câble. Cet agencement est efficace; mais lorsque l'on serre ou desserre la vis de fixation, par exemple pour modifier la hauteur de la selle, il en résulte presque automatiquement une modification de l'inclinaison du support sur lequel prend appui l'extrémité de la gaine du câble. Or le support doit être parfaitement aligné pour que soit possible un bon tirage du câble de frein.

L'invention vise à faciliter ce bon alignement du support servant de butée à l'extrémité de la gaine du câble; et elle permet même de réaliser automatiquement cet alignement.

L'invention a pour objet, à cet effet, un support présentant la particularité d'être monté libre, à la fois sur la partie centrale de la vis de fixation et entre les deux oreilles solidaires soit du tube de selle, soit d'un collier rapporté sur lui, de telle sorte que l'alignement de ce support dans l'axe de tirage du frein n'est pas modifié par le serrage ou le desserrage de la vis de fixation.

Suivant une forme d'exécution de l'invention, ce support consiste en une patte en forme générale de L, dont l'aile principale présente un orifice servant au libre passage de la tige de la vis de fixation, et dont l'autre aile est percée pour servir au passage du câble de frein, la face de cette deuxième aile étant dirigée vers l'avant du cycle et servant d'appui à l'extrémité arrière de la gaine du câble.

L'invention sera bien comprise d'ailleurs à l'aide de la description qui suit, en référence au dessin schématique annexé représentant, à titre d'exemple non limitatif, une forme d'exécution de ce support de transmission de frein arrière pour cycle :

Figure 1 en est une vue en perspective;

Figures 2 et 3 en sont, à plus grande échelle, des vues respectivement de face en élévation et en coupe suivant 3-3 de figure 2.

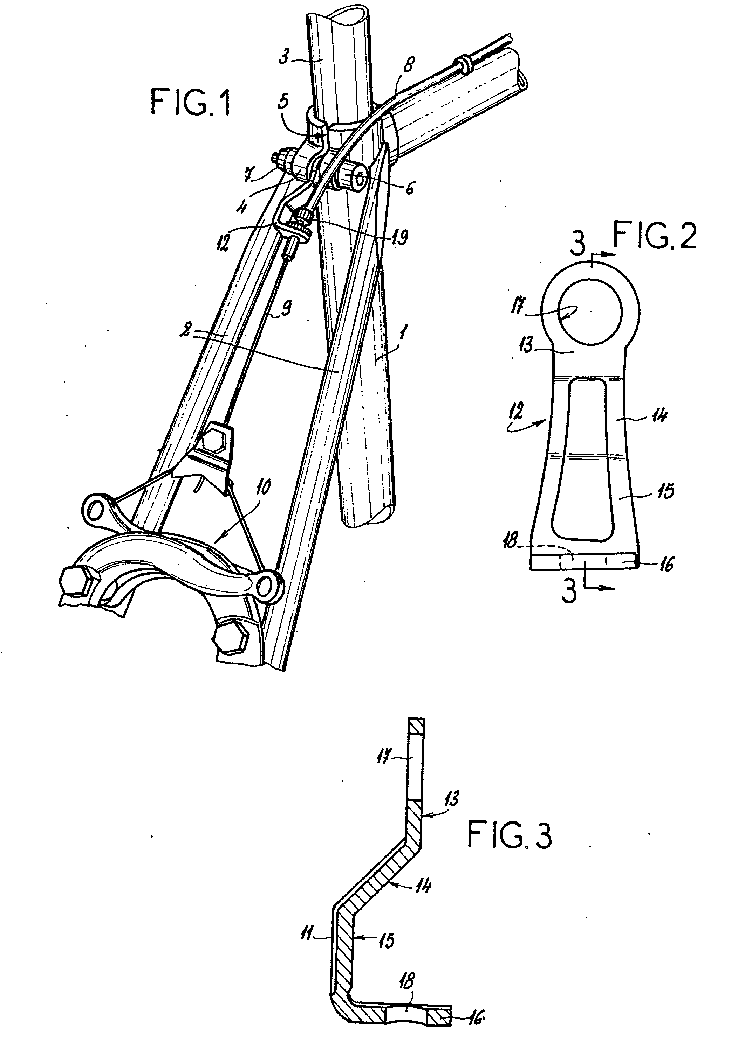

A la figure 1, 1 désigne le tube de selle d'un cadre, 2 chacun des deux haubans de la fourche arrière et 3 la tige de selle.

Comme cela est connu en soi, le tube de selle 1 est fendu dans la partie supérieure de sa zone arrière et, dans cette zone, il présente deux oreilles 4 situées de part et d'autre de sa fente 5; et comme cela est également connu, un ensemble vis 6-écrou 7, traversant les oreilles 4, est prévu pour resserrer la partie supérieure du tube de selle 1 autour de la tige de selle 3, afin d'immobiliser la selle à la hauteur voulue.

Comme cela est également connu, la vis 6 et l'écrou 7 sont utilisés pour la fixation du support servant de butée à l'extrémité arrière de la gaine 8 traversée par le câble 9 commandant le frein arrière 10.

C'est précisément ce support qui constitue la particularité faisant l'objet de l'invention. Ce support est en effet constitué par une patte qui, désignée de façon générale par 12, est fixée librement entre les deux oreilles 4 du tube de selle 1 sur la vis 6, concentriquement à elle. Cette patte 12 présente successivement :

une partie supérieure plane 13, une partie oblique 14, une partie 15 déportée par rapport à celle supérieure 13, mais parallèle à elle, et une partie terminale 16 située dans

3    0056543

un plan sensiblement perpendiculaire à la partie supérieure 13. Les parties supérieure 13 et inférieure 16 comportent chacune un orifice, respectivement 17 et 18; et les deux parties intermédiaires 14 et 15 sont nervurées comme montré en 11 pour que l'ensemble de la patte présente la rigidité nécessaire.

Par son orifice supérieur 17, cette patte est montée libre autour de la tige de la vis 6; et par son orifice inférieur 18, elle permet le libre passage du câble 9 du frein, cependant que par sa zone terminale 16 elle sert d'appui indirect à l'extrémité de la gaine 8 du câble, par l'intermédiaire d'un écrou de réglage 19.

Comme on le conçoit, le serrage et le desserrage de l'ensemble vis 6 - écrou 7, en vue par exemple d'une modification du réglage de la hauteur de la selle, n'entraîne pas une modification de la position du support 12, en raison de sa liberté en rotation autour de la vis 6. Le support servant de butée à l'extrémité arrière de la gaine 8 peut ainsi conserver sa position d'alignement nécessaire à un bon tirage du frein 10 par le câble 9.

Comme il va de soi, l'invention ne se limite pas à la seule forme d'exécution de ce support de transmission de frein arrière pour cycle qui a été ci-dessus indiquée à titre d'exemple; elle en embrasse, au contraire, toutes les variantes de réalisation, quels que soient notamment les moyens utilisés pour resserrer le tube de selle autour de la tige de selle; et elle étend bien entendu son champ d'application au cas où ces moyens de fixation sont indépendants de ceux utilisés pour la fixation de la patte servant de support et de butée à l'extrémité arrière de la gaine du câble.

4    0056543

REVENDICATIONS

1.- Support de transmission de frein arrière à tirage central pour cycle, du type dans lequel la butée de gaîne du câble prend appui sur un support solidaire d'une patte (12) fixée sur le tube de selle (1) du cadre du cycle, caractérisé en ce que la patte (12) est montée libre en rotation à la fois entre les deux oreilles (4) solidaires soit du cadre du cycle, soit d'un collier rapporté sur lui et sur la partie centrale de la vis (6) fixant l'ensemble, de telle sorte que le serrage ou le desserrage de cette vis (6) n'affecte pas l'alignement de la patte (12) dans l'axe de tirage du frein et que, même à l'état serré de cette vis, ladite patte conserve sa liberté d'orientation et d'alignement.

2.- Support de transmission de frein arrière pour cycle selon la revendication 1, caractérisé en ce qu'il est constitué par une patte (12) en forme générale de L, dont l'aile principale (13) présente un orifice (17) servant au libre passage de la tige de la vis de fixation (6) et dont l'autre aile (16) présente un orifice (18) servant au passage du câble de frein (9), la face de cette deuxième aile étant dirigée vers l'avant du cycle pour servir d'appui à l'extrémité arrière de la gaine (8).

3.- Support de transmission de frein arrière selon les revendications 1 et 2, caractérisé en ce que son aile principale présente un profil général curviligne tel que sa partie supérieure (13) étant alignée avec l'axe longitudinal général du cycle, sa zone de raccordement avec l'autre aile (16) est déportée latéralement, afin que l'orifice (18) de passage du câble (9) soit aligné avec ledit axe longitudinal général.

FIG.1

FIG.2

FIG.3

**Office européen des brevets**

## RAPPORT DE RECHERCHE EUROPEENNE

**0056543**

Numéro de la demande

EP 81 40 1989

| Catégorie | Citation du document avec indication, en cas de besoin, des parties pertinentes | Revendication concernée | CLASSEMENT DE LA DEMANDE (Int. Cl. ³) |
|---|---|---|---|
| | **DOCUMENTS CONSIDERES COMME PERTINENTS** | | |
| X | FR - A - 904 716 (FOLLIS) | | |
| | * figures 1,2; pages 1 et 2 * | 1 | B 62 K 19/38 |
| | -- | | |
| X | FR - A - 902 511 (VILLEMUS) | | |
| | * figures 1,2; pages 1 et 2 * | 1 | |
| | -- | | |
| A | GB - A - 747 258 (PHILIPS) | | |
| | * figures 1 à 6; pages 1 à 3 * | 1 | |
| | ---------- | | |

**DOMAINES TECHNIQUES RECHERCHES (Int. Cl. ³)**

B 62 K
B 62 L

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 31-03-1982 | VANNESTE |

OEB Form 1503.1  06.78